# EUROPEAN PATENT APPLICATION

(11) **EP 4 521 483 A1**
(43) Date of publication of application: **12.03.2025**
(21) Application number: 24812682.3
(22) Date of filing: 12.04.2024
(51) Int. Cl.: H01M 4/13, H01M 4/62, H01M 10/0585, H01M 10/052, H01M 10/42, H01M 4/02

(54) **ANODE FOR ALL-SOLID-STATE BATTERY, AND ALL-SOLID-STATE BATTERY COMPRISING SAME**

(30) Priority: 19.06.2023 KR 20230077975
(71) Applicant: LG Energy Solution, Ltd., SEOUL 07335 (KR)
(72) Inventor: YOM, Jeeho, Daejeon 34122 (KR); PARK, Mihui, Daejeon 34122 (KR); LEE, Hyunjeong, Daejeon 34122 (KR)
(74) Representative: Goddar, Heinz J.
(86) International application number: PCT/KR2024/004929
(87) International publication number: WO 2024/262767

(57) **Abstract**

The present invention relates to a negative electrode for an all-solid-state battery comprising a negative electrode current collector;
an amorphous carbon layer located on one side of the negative electrode current collector; and
a porous sheet inside the amorphous carbon layer, and
an all-solid-state battery comprising same.

## Description

### [Technical Field]

The present application claims the benefit and priority to Korean Patent Application No. 10-2023-0077975, filed June 19, 2023, the disclosures of which are incorporated herein by reference in their entirety.

The present invention relates to a negative electrode for an all-solid-state battery and an all-solid-state battery comprising the same.

### [Related Art]

Reusable and with high energy density, lithium secondary batteries are gaining attention as a new energy source with eco-friendly characteristics, as they can dramatically reduce the use of fossil fuels and produce no byproducts from their use.

Lithium secondary batteries are gaining attention not only as an energy source for wearable or portable devices, but also as an energy source for devices with high power and high energy density, such as electric vehicles. Therefore, research on lithium secondary batteries with high operating voltage and energy density is becoming more active.

Lithium secondary batteries are charged and discharged by the transfer of lithium ions between the positive electrode and negative electrode, and some of the lithium ions that migrate to the negative electrode attach to the surface of the negative electrode to form lithium nuclei, which can grow to become lithium dendrites, which are twig-like crystals.

When lithium dendrites form and grown on the surface of the negative electrode come into contact with the positive electrode, they can cause short circuits in lithium secondary batteries, which can shorten the lifespan of the lithium secondary battery and also be a problem in ensuring reliable performance.

Furthermore, all-solid-state batteries with high energy density suffer from frequent shorts due to the weak strength of the solid electrolyte film placed between the positive electrode and negative electrode.

It is proposed to use lithium as a negative electrode active material to increase the energy density of all-solid-state batteries. Methods for using lithium as a negative electrode active material include using lithium or a lithium alloy as a negative electrode active material, or using lithium as an active material that is precipitated at the interface of the negative electrode current collector and the solid electrolyte by charging without forming any negative electrode active material layer on the negative electrode current collector.

When lithium is used as the negative electrode active material, lithium is precipitated on the negative electrode side during charging, and if no negative electrode active material layer is formed, lithium is precipitated on the negative electrode current collector. The lithium precipitated on the negative electrode side can grow into lithium dendrite through the gaps in the solid electrolyte when the all-solid-state battery is repeatedly charged and discharged. This lithium dendrite can cause short circuits or capacity degradation of the battery. In addition, the volume expansion of the negative electrode during the charging and discharging process can cause the negative electrode to become stressed, thereby creating crack.

Therefore, there is a high need for technologies that can prevent the growth of lithium dendrites and solve the problem of cracking.

### [Prior Art Reference]

### [Patent Reference]

Korean Laid-open Patent Publication No. 10-2018-0091678

### [Detailed Description of the Invention]

### [Technical Problem]

In order to solve the above problems, the inventors of the present invention conducted various studies and confirmed that forming an amorphous carbon layer containing a porous sheet on one side of the negative electrode current collector can suppress lithium dendrite formation and minimize the volume expansion of the negative electrode caused by charging and discharging of an all-solid-state battery, and completed the present invention.

Accordingly, it is an object of the present invention to provide a negative electrode for an all-solid-state battery that can suppress the formation of lithium dendrite and minimize the volume expansion of the negative electrode, thereby preventing phenomena such as cracking and breaking occurring in the negative electrode.

Further, it is an object of the present invention to provide an all-solid-state battery capable of improving the lifetime characteristics of an all-solid-state battery by including a negative electrode for the all-solid-state battery.

### [Technical solution]

To accomplish the above objectives, the present invention provides to a negative electrode for an all-solid-state battery, comprising: a negative electrode current collector;
an amorphous carbon layer located on one side of the negative electrode current collector; and
a porous sheet; inside the amorphous carbon layer.

The present invention also provides an all-solid-state battery comprising: a positive electrode; a negative electrode; and a solid electrolyte layer interposed therebetween,
wherein the negative electrode is a negative electrode for an all-solid-state battery of the present invention,
wherein the solid electrolyte layer faces an amorphous carbon layer of the negative electrode.

### [Advantageous Effects]

The negative electrode for an all-solid-state battery of the present invention can inhibit the formation of lithium dendrite and minimize the volume expansion of the negative electrode, thereby preventing phenomena such as cracking and breaking occurring in the negative electrode.

Thus, all-solid-state batteries containing same may have improved lifetime characteristics.

### [Brief Description of Drawing]

FIG. 1 illustrates a negative electrode for an all-solid-state battery of the present invention.
FIG. 2 illustrates an all-solid-state battery of the present invention.
FIG. 3 illustrates a charged all-solid-state battery of the present invention.
FIG. 4 is a graph of the measured lifetime characteristics of the all-solid-state battery of Experimental Example 1.

### [Best Mode for Practicing the Invention]

Hereinafter, the present invention is described in more detail.

The terms and words used in this specification and claims are not to be construed in their ordinary or dictionary sense, but rather in a sense and concept consistent with the technical idea of the invention, based on the principle that the inventor(s) may define the concept of a term as he/she sees fit to best describe his/her invention.

The terminology used in the present invention is used to describe particular examples only and is not intended to limit the present invention. Singular expressions include the plural meanings unless the context clearly indicates otherwise. In the present invention, the terms "comprising" or "having" and the like are intended to designate the presence of the features, numbers, steps, actions, components, parts, or combinations thereof described, and are not intended to preclude the presence or addition of one or more other features, numbers, steps, actions, components, parts, or combinations thereof.

### Negative electrode for an all-solid-state battery

The present invention relates to a negative electrode for an all-solid-state battery, wherein the negative electrode for the all-solid-state battery of the present invention may comprise a negative electrode current collector;
an amorphous carbon layer located on one side of the negative electrode current collector; and
a porous sheet inside the amorphous carbon layer.

The negative electrode of the present invention for an all-solid-state battery does not include a negative electrode active material layer on the negative electrode current collector. In other words, the negative electrode of the present invention does not include any negative electrode active material and may be a negative electrode in a form of anode-free.

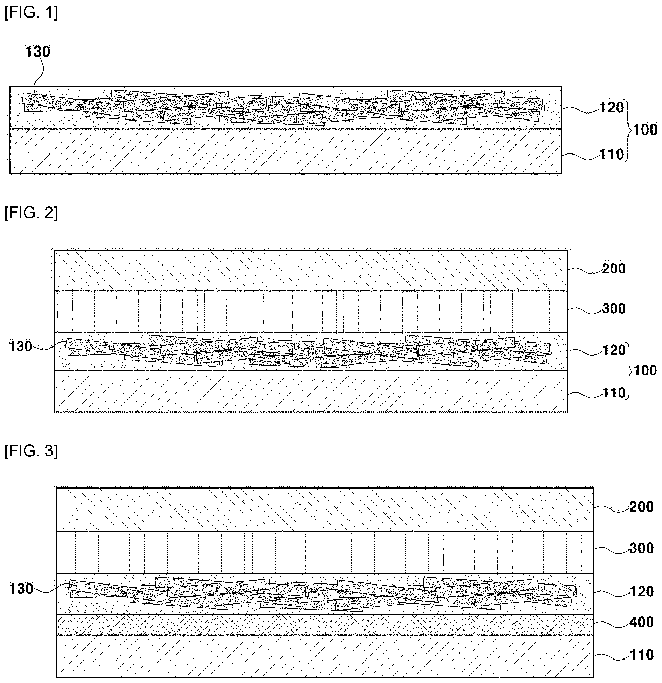

FIG. 1 illustrates a negative electrode (100) for an all-solid-state battery of the present invention. Referring to this, the negative electrode (100) for an all-solid-state battery of the present invention may be in the form of a negative electrode current collector (110) and an amorphous carbon layer (120) laminated on one side of the negative electrode current collector (110), wherein a porous sheet (130) is located inside the amorphous carbon layer (120). The porous sheet (130) may be in the form of a porous sheet embedded in the amorphous carbon layer (120).

The negative electrode current collector (110) is not particularly limited as long as it has good conductivity and is electrochemically stable in the voltage range of the lithium secondary battery. For example, the negative electrode current collector (110) may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, wherein an aluminum-cadmium alloy is preferably used as the alloy, and wherein calcined carbon, a non-conductive polymer whose surface is treated with a conductive material, or a conductive polymer may also be used.

The amorphous carbon layer (120) may be formed by dispersing the amorphous carbon in a solvent to form a slurry and coating it on one side of the negative electrode current collector (110).

The amorphous carbon may comprise carbon black, such as acetylene black, furnace black, or Ketjhen black; or graphene.

The amorphous carbon layer (120) may be to fulfill the role of ion transfer. More specifically, the amorphous carbon layer (120) may transfer lithium ions traveling to the negative electrode (100) toward the negative electrode current collector (110) without interfering with the movement of lithium ions from the positive electrode (200) to the negative electrode (100) or from the negative electrode (100) back to the positive electrode (200).

Therefore, when the negative electrode (100) for the all-solid-state battery is laminated with the solid electrolyte layer (300) and the positive electrode (200) to manufacture a battery and then charging is performed, lithium ions that have migrated to the negative electrode (100) through the amorphous carbon layer (120) may be electrodeposited at the interface of the negative electrode current collector (110) and the amorphous carbon layer (120) to form a lithium layer (400), and the formation of lithium dendrites may be inhibited. Therefore, even though the negative electrode (100) for an all-solid-state battery of the present invention does not contain a negative electrode active material, lithium is electrodeposited on the interface of the negative electrode current collector (110) and the amorphous carbon layer (120) through charging, and thus can function as an all-solid-state battery, and the formation of lithium dendrites can be suppressed, thereby improving the lifetime characteristics of the all-solid-state battery.

Since lithium ions are transported through amorphous carbon, the volume of the amorphous carbon may expand during charging and discharging of the all-solid-state battery. This volume expansion can stress the negative electrode (100), causing it to crack and degrade its stability, resulting in poor lifetime characteristics of the all-solid-state battery.

Therefore, by including a support inside the amorphous carbon layer (120), the present invention attempts to buffer the volume expansion of the amorphous carbon that occurs during charging and discharging of the all-solid-state battery, thereby facilitating the movement of lithium ions, and to improve the lifetime characteristics of the all-solid-state battery by increasing its mechanical strength.

That is, the present invention may comprise a porous sheet (130) inside the amorphous carbon layer (120), wherein the porous sheet (130) acts as a support for the amorphous carbon.

The porous sheet (130) may be located inside the amorphous carbon layer (120), i.e., buried, so that the pores and surfaces of the porous sheet (130) contain amorphous carbon.

The porous sheet (130) may be in a non-woven form, and may be made of polyethylene, polypropylene, or a mixture thereof.

Furthermore, the porosity of the porous sheet (130) may be 70% to 95%. Within this porosity range, the porous sheet (130) can serve as a support to buffer the volume expansion of the amorphous carbon that occurs during charging and discharging of the all-solid-state battery, thereby solving problems such as breaking or cracking of the negative electrode (100) for an all-solid-state battery.

The pores of the porous sheet (130) have an interconnected structure, such that they penetrate from one side of the sheet to the other, allowing flowable materials to pass through.

The volume ratio of the porous sheet (130) to the amorphous carbon layer (120) may be 5:95 to 30:70, preferably 10:90 to 20:80. Within the above volume ratio range, the porous sheet (130) can act as a support to buffer the volume expansion of the amorphous carbon that occurs during charging and discharging of the all-solid-state battery. In addition, the amorphous carbon can facilitate the migration of lithium ions, inhibit the growth of lithium dendrites, and allow lithium to be stably deposited at the interface of the negative electrode current collector (110) and the amorphous carbon layer (120).

The negative electrode (100) for an all-solid-state battery may be manufactured by positioning a porous sheet (130) over the negative electrode current collector (110), followed by applying and drying a slurry comprising amorphous carbon.

Alternatively, it may be manufactured by fabricating a porous sheet (130) on the negative electrode current collector (110) followed by applying and drying a slurry comprising amorphous carbon.

In order to secure the bonding force between the negative electrode current collector (110) and the porous sheet (130), the porous sheet (130) may be positioned or manufactured after casting a solution comprising a binder on the negative electrode current collector (110), and the binder may be any type of binder known in the art, without limitation.

Further, the application of a slurry comprising amorphous carbon on the porous sheet (130) may be such that the porous sheet (130) is located inside the amorphous carbon layer (120), and the amorphous carbon is located on the surface and in the pores of the porous sheet (130). Furthermore, the amorphous carbon may be located in some of the pores, or the amorphous carbon may be located in such a way as to block all the pores.

Preferably, a slurry comprising amorphous carbon may be applied and dried on the porous sheet (130) so that the porous sheet (130) is positioned inside the amorphous carbon layer (120). As used herein, "inside" may mean that the porous sheet (130) is embedded in the amorphous carbon layer (120). The porous sheet (130) has a structure of a plurality of interconnected pores, which is perforated from one side of the sheet to the other, so that a slurry comprising amorphous carbon can be inserted into the pores, or amorphous carbon can be inserted into the pores by rolling. Thus, the pores may be filled with amorphous carbon, and thus the surface of the negative electrode current collector (110) may also have amorphous carbon.

The amorphous carbon layer (120) may further include a binder to secure bonding between the amorphous carbons and to secure bonding of the negative electrode current collector (110) and the amorphous carbon layer (120).

The binder may include at least one selected from the group consisting of, for example, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), styrene butyrene rubber, fluorinated rubber, and copolymers thereof.

The amorphous carbon layer (120) may comprise 1% to 10% by weight, preferably 3% to 7% by weight, of the binder relative to the total weight of the amorphous carbon layer (120). In this case, the amorphous carbon layer (120) may mean that it does not contain a porous sheet (130) inside, i.e., it is composed of amorphous carbon only.

### All-solid-state battery

The present invention also relates to an all-solid-state battery comprising a positive electrode; a negative electrode; and a solid electrolyte layer interposed therebetween.

The negative electrode is a negative electrode for an all-solid-state battery of the present invention as described above.

The solid electrolyte layer may face an amorphous carbon layer of the negative electrode.

FIG. 2 illustrates an all-solid-state battery of the present invention. Referring to this, the all-solid-state battery of the present invention is in the form of a negative electrode (100), a solid electrolyte layer (300), and a positive electrode (200) stacked in this order, wherein the amorphous carbon layer (120) of the negative electrode (100) and the solid electrolyte layer (300) may be face-to-face.

FIG. 3 illustrates a charged state of an all-solid-state battery of the present invention. Referring to this, it can be seen that a lithium layer (400) is formed at the interface of the negative electrode current collector (110) and the amorphous carbon layer (120). This may be due to lithium ions released from the positive electrode (200) migrating through the solid electrolyte layer (300) and the amorphous carbon layer (120) of the negative electrode (100) and electrodeposited at the interface of the negative electrode current collector (110) and the amorphous carbon layer (120) to form the lithium layer (400).

Thus, the all-solid-state battery of the present invention may be formed such that a lithium layer (400) is formed at the interface of the negative electrode current collector (110) and the amorphous carbon layer (120) through charging. The lithium layer (400) may include both lithium metal formed in layers and a porous structure in which the lithium metal is not formed in layers (e.g., a structure in which the lithium metal is agglomerated in the form of particles). While the present invention is described with reference to the form of the lithium layer (400), it is obvious that this description is not intended to exclude structures in which the lithium metal is not formed in layers.

The positive electrode (200) may include a positive electrode current collector and a positive electrode active material layer applied to one or both sides of the positive electrode current collector.

The positive electrode current collector may be the same as the negative electrode current collector (110) described above.

The positive electrode active material layer may comprise a positive electrode active material and optionally a solid electrolyte, a conductive material, and a binder.

The positive electrode active material may be a lithium source for forming the lithium layer (400).

The positive electrode active material may vary depending on the type of all-solid-state battery. For example, the positive electrode active material may include, but is not limited to, a layered compound, such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₈, V₂O₅, or Cu₂V₂O₇; a lithium nickel oxide of the Ni site type, represented by formula LiNi₁₋ₓMₓO₂ (wherein M is Co, Ni, Fe, Cr, Zn, or Ta; and 0.01≤x≤0.1); a lithium manganese complex oxide represented by formula LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure represented by LiNiₓMn₂₋ₓO₄; LiCoPO₄; LiFePO₄; elemental sulfur (S₈); or a sulfur-based compound such as Li₂Sₙ (wherein n is 1), organosulfur compounds or carbon-sulfur polymers ((C₂Sₓ)ₙ, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause any chemical changes in the lithium secondary battery and has porosity and conductivity.

For example, the conductive material can be a porous carbon-based material, such as carbon black, graphite, graphene, activated carbon, or carbon fiber; metallic fibers, such as metal mesh; metallic powders, such as copper, silver, nickel, or aluminum; or organic conductive materials, such as polyphenylene derivatives. These conductive materials may be used singly or in combination.

The products currently commercially available as a conductive material include the Acetylene Black series (such as Chevron Chemical Company or Gulf Oil Company), Ketjen Black EC series (Armak Company), Vulcan XC-72 (Cabot Company), and Super P (MMM). Examples include acetylene black, carbon black, and graphite.

Further, the positive electrode (200) may further comprise a binder, wherein the binder more increases the cohesion between the components comprising the positive electrode (200) and between them and the current collector, and any binder known in the art may be used.

For example, the binder may be one, or a mixture or copolymer of two or more selected from the group consisting of a fluoroplastic binder comprising polyvinylidenefluoride (PVdF) and polytetrafluoroethylene (PTFE); a rubber-based binder comprising styrene butadiene rubber (SBR), acrylonitrile-butadiene rubber, and styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene, and polypropylene; a polyimide binder; a polyester binder; and a silane-based binder.

The solid electrolyte may comprise at least one selected from the group consisting of a sulfide-based solid electrolyte, a polymer-based solid electrolyte, and an oxide-based solid electrolyte, and may preferably comprise a sulfide-based solid electrolyte.

The sulfide-based solid electrolyte may contain sulfur (S) and have an ionic conductivity of a metal belonging to Group 1 or 2 of the periodic table, and may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, preferably at least one selected from the group consisting of Li₆PS₅Cl, Li₆PS₅Br and Li₆PS₅I. The Li₆PS₅Cl, Li₆PS₅Br and Li₆PS₅I may be an argyrodite type solid electrolyte. Furthermore, the sulfide-based solid electrolyte may be doped with trace elements, for example, Li₆PS₅Cl may be additionally doped with bromine (Br).

The polymer-based solid electrolyte is a composite of a lithium salt and a polymeric resin, that is, a polymer electrolyte material formed by the addition of a polymeric resin to a solvated lithium salt, and may exhibit an ionic conductivity of about 1×10⁻⁷ S/cm or more, preferably about 1×10⁻⁵ S/cm or more.

Non-limiting examples of the polymeric resins may include at least one of polyether-based polymers, polycarbonate-based polymers, acrylate-based polymers, polysiloxane-based polymers, phosphazene-based polymers, polyethylene derivatives, and alkylene oxide derivatives such as polyethylene oxide, phosphate ester polymers, poly agitation lysines, polyester sulfides, polyvinyl alcohols, polyvinylidene fluorides, polymers comprising ionic dissociating groups, and the like. Further, the polymer-based electrolyte may include at least one of a polymeric resin, such as a branched copolymer, a comb-like polymer, and a cross-linked polymer resin in which a polyethylene oxide (PEO) main chain is copolymerized with an amorphous polymer such as PMMA, polycarbonate, polysiloxane (PDMS), and/or phosphazene as a comonomer.

In the polymer-based solid electrolyte, the lithium salts are ionizable lithium salts, which can be represented by Li⁺X⁻. The anions of such lithium salts are not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, or (CF₃CF₂SO₂)₂N⁻.

The oxide-based solid electrolyte may contain oxygen (O) and have the ionic conductivity of a metal belonging to Group 1 or 2 of the periodic table. For example, it may include at least one selected from the group consisting of LLTO-based compounds Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP-based compounds, LATP-based compounds, Li₁₋ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1), LiTiₓZr₂₋ₓ(PO₄)₃ (wherein 0≤x≤1), LISICON-based compounds, LIPON-based compounds, perovskite-based compounds, nasicon-based compounds, and LLZO-based compounds.

The solid electrolyte layer (300) may comprise a solid electrolyte having a lithium ion conductivity, and may comprise any of the solid electrolytes described above. It may further comprise a binder, wherein the binder is as described above.

The preparation of the all-solid-state battery is not particularly limited by the present invention, and the known methods may be used.

For example, a solid electrolyte film is disposed between the positive electrode (200) and the negative electrode (100), and then the cell is assembled by compression molding or rolling. The assembled cell is then installed in an outer material and sealed by heating compression. Laminated packs of aluminum or stainless steel, and metallic containers, such as cylindrical or prismatic containers, can be used as the outer material.

In one example, the positive electrode (200) is prepared via a slurry coating process in which the electrode is prepared in the form of a slurry composition comprising an electrode active material, a solvent, and a binder, coated, and then dried.

The method of coating the positive electrode slurry onto the current collector may include dispensing the positive electrode slurry onto the current collector and uniformly dispersing it using a doctor blade, die casting, comma coating, or screen printing. In addition, the positive electrode slurry can be molded on a separate substrate and then bonded to the current collector by pressing or lamination. In this case, the final coating thickness can be controlled by adjusting the concentration of the slurry solution or the number of coatings.

The drying process is a process of removing solvent and moisture from the slurry in order to dry the slurry coated on the metal current collector, which may vary depending on the solvent used. For example, it is performed in a vacuum oven at 50 to 200°C. Drying methods include, for example, drying by warm air, hot air, or low humidity air, vacuum drying, or irradiation with (far) infrared or electromagnetic radiation. The drying time is not particularly limited, but is typically in the range of 30 seconds to 24 hours.

After the drying process, the process may further comprise a cooling process, wherein the cooling process may be slow cooling to room temperature to ensure that the recrystallized organization of the binder is well formed.

The shape of the all-solid-state battery is not particularly limited and can be cylindrical, stacked, coin-shaped, or otherwise.

### [Mode for Practicing the Invention]

Hereinafter, preferred examples of the present invention are described for the purpose of illustrating the present invention, but it is apparent to those skilled in the art that various changes and modifications are possible within the scope of the present invention and the technical idea, and that such changes and modifications fall within the scope of the appended patent claims.

### <Preparation of an all-solid-state battery>

### Example 1

The positive electrode active material (NCM 811), conductive material (carbon fiber), solid electrolyte (Li₆PS₅Cl), and binder (polytetrafluoroethylene) were mixed in a weight ratio of 84:0.2:14.8:1, and the mixture was applied to the positive electrode current collector, dried and rolled, to prepare a positive electrode.

The solid electrolyte (Li₆PS₅Cl) and the binder (styrene-butadiene-styrene copolymer) were mixed in a weight ratio of 98:2, and the mixture was added to anisole to form a slurry. The slurry was applied on a release film (polyethylene terephthalate) using a bar coater, and dried, and the release film was removed to prepare a solid electrolyte layer.

A 10 µm thickness SUS was prepared as the negative electrode current collector. A solution containing a binder (PVDF) was cast onto the negative electrode current collector and a porous sheet (PP/PE nonwoven fabric, porosity 89%) was placed on it. A slurry of acetylene black and binder (PVDF) in a weight ratio of 93.5:6.5 was coated and dried to prepare an amorphous carbon layer. The negative electrode comprises an amorphous carbon layer on the negative electrode current collector and a porous sheet inside the amorphous carbon layer.

An all-solid-state battery was prepared by stacking the positive electrode, solid electrolyte layer, and negative electrode sequentially, with the solid electrolyte layer and the amorphous carbon layer of the negative electrode facing each other.

### Comparative Example 1

A 10 µm thickness SUS was prepared as the negative electrode current collector. An amorphous carbon layer was prepared by coating and drying a slurry of acetylene black and a binder (PVDF) in a weight ratio of 93.5:6.5. The negative electrode has an amorphous carbon layer on the negative electrode current collector and does not contain a porous sheet inside the amorphous carbon layer.

The positive electrode and solid electrolyte layer were prepared the same as in Example 1 to prepare an all-solid-state battery.

### Experimental Example 1. Measurement of the lifetime characteristics of an all-solid-state battery

The lifetime characteristics of the all-solid-state batteries of Example 1 and Comparative Example 1 were measured.

The lifetime characteristics were measured as the capacity retention rate of the all-solid-state battery for 50 charge and discharge cycles in which charging was performed to 4.25 V at 0.33 C in CCCV mode at a temperature of 60°C with a 0.1C cut-off, and discharging was performed to 3.0 V at 0.33C in CC mode.

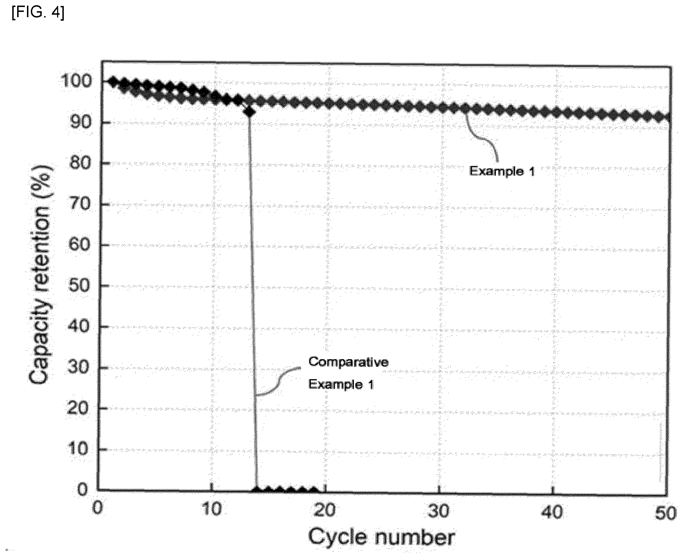

The results are shown in FIG. 4.

The all-solid-state battery of Example 1 of the present invention showed a capacity retention rate of 92.6%.

However, the all-solid-state battery in Comparative Example 1 shorted out at cycle 14 and showed very poor lifetime characteristics.

In other words, it can be seen that in the negative electrode for an all-solid-state battery, including a porous sheet inside the amorphous carbon layer not only inhibits the formation of lithium dendrites, but also buffers the volume expansion of the amorphous carbon that occurs when the all-solid-state battery is charged and discharged, thereby facilitating the movement of lithium ions and solving the problem of negative electrode damage, thereby providing an all-solid-state battery with very good lifetime characteristics.

### [Reference Numerals]

100: Negative electrode
110: Negative electrode current collector
120: Amorphous carbon layer
130: Porous sheet
200: Positive electrode
300: Solid electrolyte layer
400: Lithium layer

## Claims

1. A negative electrode for an all-solid-state battery, comprising:
a negative electrode current collector;
an amorphous carbon layer located on one side of the negative electrode current collector; and
a porous sheet within the amorphous carbon layer.

2. The negative electrode for an all-solid-state battery according to claim 1, comprising amorphous carbon in the pores and on a surface of the porous sheet.

3. The negative electrode for an all-solid-state battery according to claim 1, wherein the porous sheet is a non-woven fabric.

4. The negative electrode for an all-solid-state battery according to claim 3, wherein the nonwoven fabric comprises of polyethylene, polypropylene, or a mixture thereof.

5. The negative electrode for an all-solid-state battery according to claim 1, wherein the porous sheet has a porosity of 70 to 95%.

6. The negative electrode for an all-solid-state battery according to claim 1, wherein a volume ratio of the porous sheet to the amorphous carbon layer is 5:95 to 30:70.

7. The negative electrode for an all-solid-state battery according to claim 1, wherein the amorphous carbon layer further comprises a binder.

8. The negative electrode for an all-solid-state battery according to claim 7, wherein the amorphous carbon layer comprises 1 to 10% by weight binder based on the total weight of the amorphous carbon layer.

9. The negative electrode for an all-solid-state battery according to claim 1, wherein no negative electrode active material layer is formed on the negative electrode current collector.

10. An all-solid-state battery comprising: a positive electrode; a negative electrode; and a solid electrolyte layer interposed therebetween,
wherein the negative electrode is the negative electrode for an all-solid-state battery according to claim 1,
wherein the solid electrolyte layer faces an amorphous carbon layer of the negative electrode.

11. The all-solid-state battery according to claim 10, wherein when charging the all-solid-state battery, lithium is electrodeposited at the interface of the negative electrode current collector and the amorphous carbon layer.
